# EUROPEAN PATENT SPECIFICATION

(11) **EP 3 166 396 B1**
(45) Date of publication and mention of the grant of the patent: **26.12.2018**
(21) Application number: 15734168.6
(22) Date of filing: 06.07.2015
(51) Int. Cl.: A01J 25/12

(54) **A METHOD AND AN APPARATUS FOR RELEASING CHEESES FROM MOULDS**
VERFAHREN UND VORRICHTUNG ZUM TRENNEN VON KÄSE AUS FORMEN
PROCÉDÉ ET APPAREIL DE DÉMOULAGE DE FROMAGES

(30) Priority: 07.07.2014 SE 1450865
(43) Date of publication of application: 17.05.2017
(73) Proprietor: Tetra Laval Holdings & Finance S.A., 1009 Pully (CH)
(72) Inventor: SPIJKERMAN, Harrie, 8191 LP Wapenveld (NL); ROS, Sikko, 9076 JA St. Annaparochie (NL)
(74) Representative: Tetra Pak - Patent Attorneys SE
(86) International application number: PCT/EP2015/065308
(87) International publication number: WO 2016/005309

(56) References cited:
- EP-A1- 1 269 832
- DE-A1- 3 134 607
- FR-A1- 2 282 795

## Description

### Technical Field

The present invention generally relates to the field of cheese production. More particularly, it is presented a system and a method for releasing cheeses from moulds, also known as de-moulding.

### Background of the invention

Today, within large scale production of semi-hard and hard cheese the process can be divided in the following main steps: preparing a mixture of curd and whey by treating milk and adding rennet or another type of coagulant, dosing the curd and whey mixture into moulds, pressing the mixture in order to create a cheese by removing a great part of the whey, brining the cheese in a salty bath and finally ripening the cheese. Variations of this approach may occur depending for instance on the type of cheese to be produced.

When pressing the curd and whey mixture into a cheese, the curd and whey mixture is placed in a mould, that is, a body provided with openings for holding the curd and releasing the whey. After pressing, the cheese is released from the mould, for instance by turning the mould upside down such that the cheese can fall out from the mould, or, alternatively, pull out the cheese from the mould using an arm provided with suction cups.

A problem with current technology is that from time to time the cheeses are damaged when being released from the moulds. This in turn results in that the cheeses cannot be sold, but end up as product waste. Some current technologies are reflected by patent documents FR2282795A1, DE3134607A1 and EP1269832A1.

### Summary

Accordingly, methods and apparatuses seek to mitigate, alleviate or eliminate one or more of the above-identified deficiencies in the art and disadvantages singly or in any combination and solve at least the above mentioned problems.

According to a first aspect it is provide a method for releasing a cheese from a mould, said mould comprising a first end part, a sleeve formed body and a second end part, said method comprising detaching said first end part from said cheese, turning said mould with said cheese such that said cheese is placed on said first end part, removing said second end part, detaching said cheese from said sleeve formed body by moving said sleeve shaped body downwards relative to said cheese, turning said mould with said cheese upside down such that said first end part is placed on said cheese, removing said first end part, separating said cheese and said sleeve shaped body by displacing said cheese and said sleeve shaped body relative to each other.

The cheese may be separated from said sleeve shaped body by vertically displacing said cheese and said sleeve shaped body.

The cheese may be separated from said sleeve shaped body by moving said cheese downwards a first vertical distance while moving said sleeve shaped body downwards a second vertical distance, wherein said first vertical distance is greater than said second vertical distance.

The step of separating said cheese from said sleeve shaped body by displacing said cheese and said sleeve shaped body may comprise pushing said cheese out from said sleeve shaped body.

The method may further comprise determining a height of said cheese by determining a position of said lid in relation to said sleeve shaped body.

The method may further comprise comparing said height of said cheese to a reference height interval, and, if said height is not within said interval, discarding said cheese.

The first end part may be a lid.

The second end part may be a bottom.

According to a second aspect it is provided an apparatus for releasing a cheese from a mould, said mould comprising a first end part, a sleeve formed body and a second end part, said apparatus comprising a first device for detaching said first end part from said cheese, a second device for turning said mould with said cheese such that said cheese is placed on said first end part, a third device for removing said second end part, a fourth device for detaching said cheese from said sleeve formed body by moving said sleeve shaped body downwards relative to said cheese, a fifth device for turning said mould with said cheese upside down such that said first end part is placed on said cheese, a sixth device for removing said first end part, a seventh device for separating said cheese and said sleeve shaped body by displacing said cheese and said sleeve shaped body relative to each other.

The seventh device may comprise a first conveyor belt arrangement for conveying said sleeve shaped body and a second conveyor belt arrangement for conveying said cheese.

At least in part said first conveyor belt arrangement may be placed above said second conveyor belt arrangement.

The second conveyor belt arrangement may at least in part be placed between a first part of said first conveyor belt arrangement and a second part of said firs conveyor belt arrangement.

The first end part may be a lid.

The second end part may be a bottom.

### Brief description of the drawings

The above, as well as additional objects, features and advantages will be better understood through the following illustrative and non-limiting detailed description of embodiments with reference to the appended drawings, wherein:
Fig 1 illustrates an overview of steps involved in cheese production.
Fig 2 illustrates a system for production of cheese.
Fig 3 illustrates a whey drainage system.
Fig 4 illustrates a cheese mould.
Fig 5 illustrates traditional, manual cheese pressing.
Fig 6 illustrates a conveyor press.
Fig 7 illustrates a cross sectional view of a cheese mould.
Fig 8 illustrates a cross sectional view of a closed mould using vacuum for pressing out whey.
Fig 9 illustrates closed moulds communicating with a server via a data communications network.
Fig 10 illustrates an overview of a cheese production system having a storage room for keeping closed moulds during pressing.
Fig 11 illustrates an example of two fillers that can be used in the cheese production system illustrated in fig 10.
Fig 12 illustrates an example of a vacuum pump station that can be used in the cheese production system illustrated in fig 10.
Fig 13 illustrates an example of a robot that can be used in the cheese production system illustrated in fig 10.
Fig 14 illustrates a scheme of a method for cheese production using closed moulds.
Fig 15a and b illustrates an example of a demoulding apparatus that can be used in the cheese production system illustrated in fig 10.
Fig 16a and b illustrates another example of a demoulding apparatus.
Fig 17 illustrates yet another example of a demoulding apparatus.
Fig18 illustrates a further example of a demoulding apparatus.
Fig 19 illustrates an even further example of a demoulding apparatus.

### Detailed description of preferred embodiments

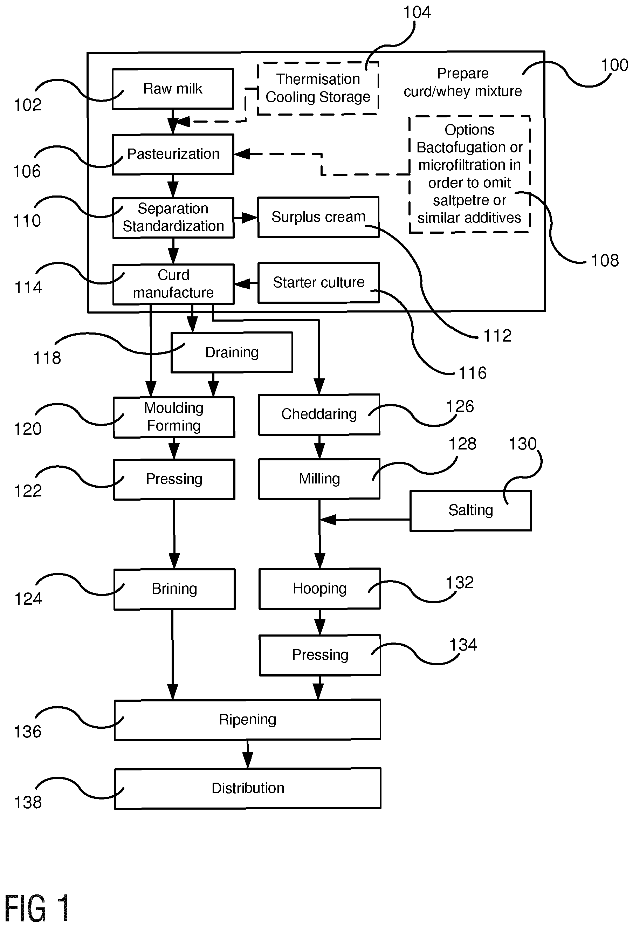

Fig 1 illustrates general steps for producing hard, semi-hard and cheddar cheese. Depending on which type of cheese to produce, the steps and/or the order of the steps may vary. The process flow illustrated in fig 1 is not an exhaustive process flow taken all different types of cheese into account, rather an example of how the process may look and that it may vary for different types of cheeses.

In a first step 100 a curd and whey mixture is prepared. More specifically, this first step 100 can comprise a step 102 of receiving raw milk. If the raw milk is not processed directly, the raw milk can in step 104 be stored and thermised. In step 106 the raw milk can be pasteurized in order to kill unwanted microorganisms, especially pathogenic types. Instead of pasteurization or as a complement thereto a step 108 of bactofugation may be used. Next, in a step 110 the milk can be separated and standardized, and in a step 112 surplus cream may be taken care of. When having a standardized milk, in a step 114, curd and whey mixture can be manufactured by, in a step 116, adding a starter culture, e.g. rennet.

Thereafter, when having prepared the curd and whey mixture, depending on which cheese to produce different further steps are taken. For some cheese types, in a step 118, the curd and whey mixture can be drained, e.g. in a cheese vat, in a pre-press vat or in a cheese column.

After having drained the curd and whey mixture, this can be, in a step 120, placed in moulds.

After having been placed in moulds, in a step 122, a pressure is applied in order to press out whey from the curd and whey mixture.

During pressing out whey from the curd and whey mixture, the curd and whey mixture in the mould takes the form of a cheese, that is, a body keeping together on its own. The cheese can in a next step 124 be transferred to brining.

As illustrated in fig 1, an alternative to the process described with reference to steps 118 to 124, the curd and whey mixture can, in steps 126, 128, 130, 132, 134 being exposed to so-called cheddaring, milling, salting, hooping and pressing to become a cheddar or alike type of cheese.

After the step 124 or the step 134, the cheese can, in step 136, be transferred to ripening, and then for distribution, step 138.

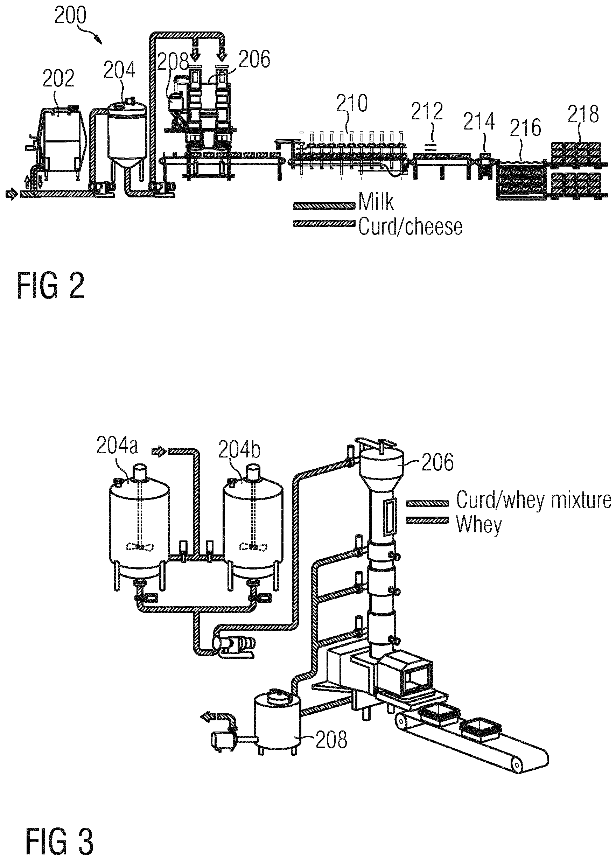

Fig 2 illustrates an example of a system 200 for mechanised production of Gouda cheese. In this example, based on pasteurized and standardized milk and a starter culture a curd and whey mixture can be prepared in a cheese tank 202. When prepared, the curd and whey mixture can be fed to a buffer tank 204 in which the curd and whey mixture can be stored.

In order to drain whey from the curd and whey mixture a continuous drainage column 206, e.g. a Tetra Tebel Casomatic marketed by Tetra Pak, can be used. Surplus whey can be caught in whey collecting tanks 208 connected to the continuous drainage column 206.

When leaving the continuous drainage column the curd and whey mixture can be placed in moulds. Next, a lid can be placed on the curd and whey mixture in the mould (not illustrated in fig 2).

The moulds provided with lids can be fed to a pressing apparatus, in this particular example illustrated in fig 2, a conveyor press 210. When applying a pressure on the lid, the whey in the curd and whey mixture is pressed out via openings in the moulds. The openings are of a size such that the curd particles in the curd and whey mixture are retained in the mould when a pressure is applied on the lid, while the whey can pass through the openings.

After having pressed the curd and whey mixture, the curd and whey mixture has changed into a body keeping together on its own. Herein, in order to distinguish this stage from the previous stage, it is therefore from this stage of the process referred to as a cheese instead of curd and whey mixture, or only as curd.

Next, the lid is removed 212. In modern systems this is usually done by an apparatus, even though not illustrated in fig 2.

Thereafter, in order to make sure that the cheese weighs according to expectations the cheese is weighed by a weighing device 214.

After being weighed, the cheese is placed in a brine bath 216 and thereafter in a ripening store 218.

Fig 3 illustrates a more detailed view of buffert tanks 204a, 204b, a continuous drainage column 206 and a whey collecting tank 208.

In order to avoid that the curd and whey mixture settle one or several agitators may be used in the buffert tanks 204a, 204b.

Due to gravity and hydraulic effect of the whey flowing through the bed of curd formed on the inside of the drainage column, whey is gradually pressed out from the curd and whey mixture as it passes through the column 206 experiencing an increased top load. As illustrated, whey may be collected at different sections.

In the column 206 the curd bed can be fed downwards out from the drainage column, separating the required volume from it, for instance by cutting it off, often referred as a curd block, which thereafter can be transferred in moulds presented by a mould conveyor.

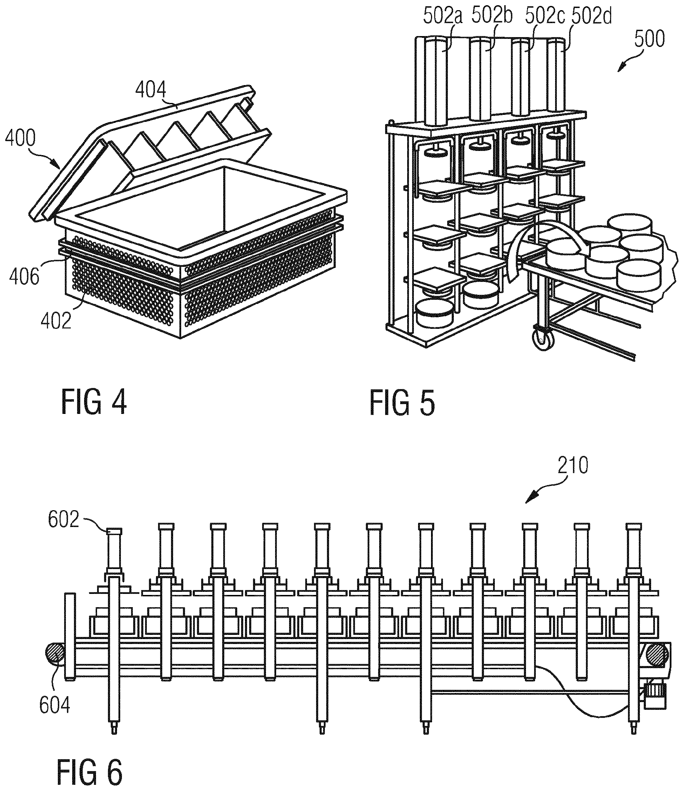

Fig 4 illustrates an example of a mould 400. In this example, the mould comprises a main part 402 comprising a bottom section and side walls provided with openings for retaining curd particles, but letting through whey. A lid 404 can be placed on the main part 402 after this has been filled with a curd and whey mixture. In order to strengthen the side walls of the main part, a metal section 406 may be provided.

In fig 5 a traditional, manual pressing equipment is disclosed. An alternative to using the conveyor press is to manually place the moulds filled with curd and whey mixture in a vertical pressing unit 500 having a number of pneumatic cylinders 502a, 502b, 502c, 502d for forming a pressure on lids placed on top of curd and whey mixture filled moulds.

Fig 6 illustrates the conveyor press 210 of fig 2 in further detail. As in the vertical pressing unit 500 of fig 5, pneumatical cylinders 602 can be provided for forming the pressure. Unlike the vertical pressing unit 500, the moulds are placed separately (or sometimes stacked to limited heights) on a conveyor 604 and transferred without manual effort.

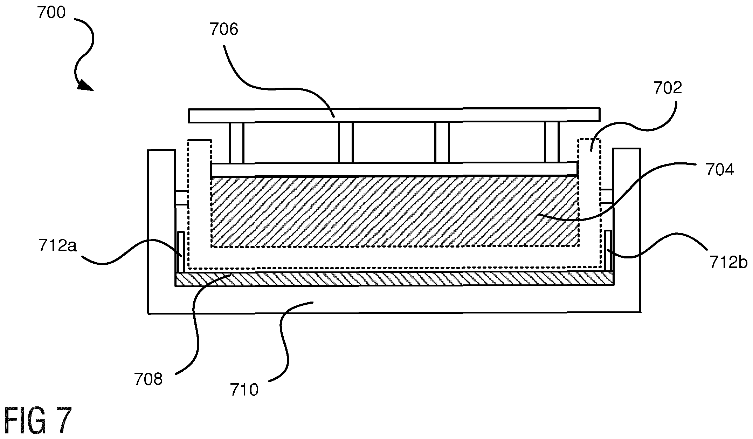

Fig 7 illustrates a cross sectional view of a mould 700 to a large extent similar to the one illustrated in fig 4. A main part 702 provided with openings for letting through whey, but keeping curd particles, is during pressing holding a curd and whey mixture 704. On top of the curd and whey mixture 704 it can be placed a lid 706 that is pressed down by e.g. a pneumatic cylinder (not illustrated). Pressed out whey 708 is collected in a tray 710. In order to measure how much whey that has been pressed out one or several liquid level sensors 712a, 712b may be used.

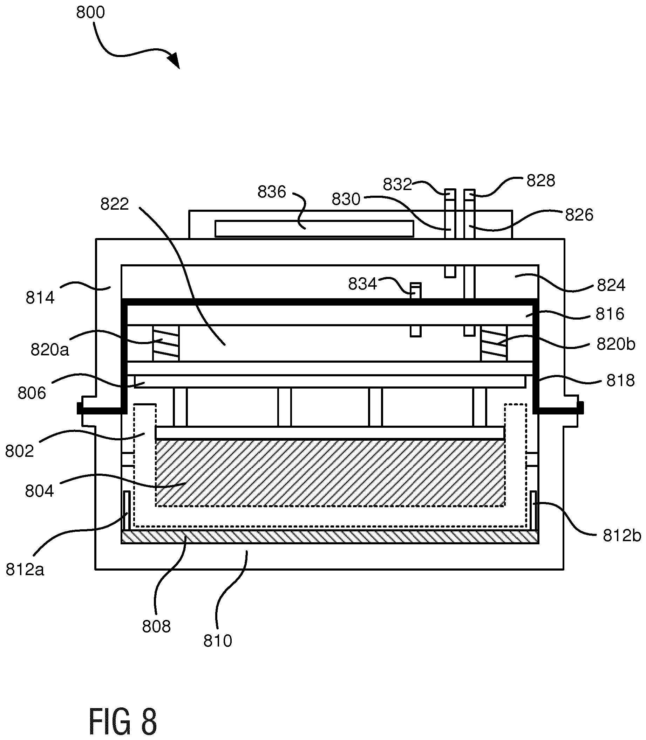

Fig 8 illustrates a cross sectional view of an example of a device 800 comprising a main part 802 provided with openings for letting through whey, but retaining curd particles, configured to hold a curd and whey mixture 804. On top of the curd and whey mixture 804 it can be placed a lid 806 that is pressed down on the curd and whey mixture 804 such that whey 808 is pressed out and down into a tray 810. In order to keep track of the volume of pressed out whey liquid level sensors 812a, 812b can be placed in the tray 810. Alternatively during pressing the whey may be removed at a specific moment by opening a drain valve, not illustrated, and measuring the weight or volume of the drained whey.

In order to form a closed casing a cover 814 can be placed on top of the tray 810.

The pressure force pushing down the lid 806 can be formed by using gas pressure differences. In the illustrated example, a movable element 816 is placed between the lid 806 and a membrane 818, for instance a rubber membrane. The movable element 816 can comprise two plates being kept apart by a number of springs 820a, 820b. The springs 820a, 820b also provide for that the lid 806 is pushed down evenly. On the bottom side of the membrane enclosed by the tray 810 a first space 822 can be formed holding the main part 802 with the curd and whey mixture.

On the other side of the membrane 818, between the membrane 818 and the cover 814 a second space 824 can be formed. By having a first connection pipe 826 provided with a first valve 828, a pump may be used for pumping out air from the first space 822, thereby lowering the gas pressure, with the effect that a gas pressure difference is formed pushing down the movable element 816 and the lid 806 underneath it. This will provide for that the lid 806 is pressing out whey from the curd and whey mixture in the main part 802.

In order to provide for that a gas pressure can be lowered in the second space 824 a second connection pipe 830 provided with a second valve 832 can be used. As the first connection pipe 826, the second connection pipe can be connected to a pump such that air can be pumped out from the second space 824. In order to let in air, and thereby increasing the gas pressure in the second space 824, the second valve 832 can be opened.

Optionally, there may be a third connection pipe 834 provided with a third valve between the first space 822 and the second space 824. Having this third connection pipe air, or any other gas, may be transferred from the first space 822 to the second space 824, thereby reducing the pressure force formed by the pressure difference.

The pressing cycle may comprise a number of steps. In a first step air can be pumped out from the first and second spaces 822,824 such that low pressure, being below atmospheric pressure, is formed in both spaces. By having the pressure in the second space 824 slightly higher than in the first space 822 a small pressure force is formed.

After the initial pressing described above, when usually the pressure force is lower than in subsequent pressing, the pressure force can be increased by adjusting the second valve 832 attached to the second connection pipe 830 such that more air is let into the second space 824 thereby increasing the gas pressure difference between the first space 822 and the second space 824, and as an effect increasing the pressure force applied onto the curd and whey mixture.

A controller 836 may be part of the device 800. The controller 836 may be configured to collect information from gas pressure sensors (not illustrated) and/or from the liquid level sensors 812a, 812b and/or other sensors placed in the device 800. The controller 836 may also be configured to communicate via wire or wireless via a data communications network with a main controller or with a remote server, e.g. using ZigBee technology. Further, the controller 836 may be configured to send an alarm when gas pressure is lost or if something else unexpected occurs. Additionally, by continuously monitoring gas pressure as well as volume of pressed out whey and/or retained curd and whey mixture, the valves attached to the connection pipes may with the help of the controller be adjusted individually for the mould.

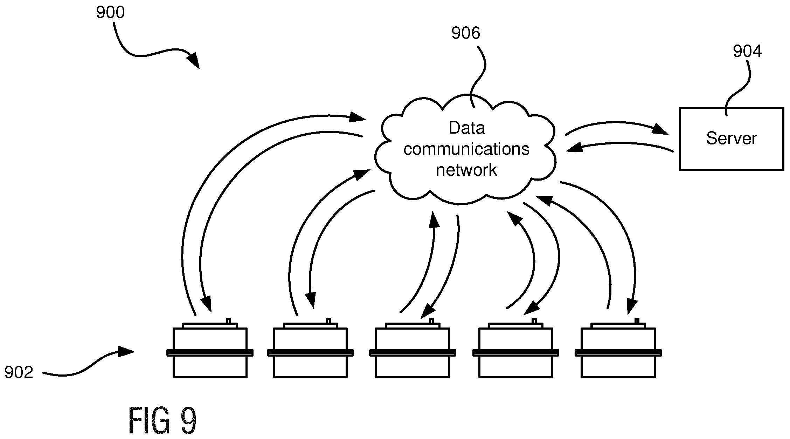

Fig 9 illustrates a system 900 comprising a number of closed moulds 902, similar to the device 800 illustrated in fig 8, communicating with a server 904 via a data communications network 906. The server 904 can be configured to upload instructions to the moulds before the pressing starts, which may be at the same time as the gas pressure in the closed moulds 902 are lowered, e.g. by pumping out air from the closed mould. The uploaded instructions may comprise information on when and how much air that should be let in, e.g. by opening the valves, at different stages of the pressing. Further, the server may be configured to download data from the moulds after the pressing in order to make sure that the pressing has been performed according to plan.

Further, the server may be configured to download out of control messages and data from the moulds when mould processes are out of normal controls. Even the server may be configured to upload altered instructions in these occasions.

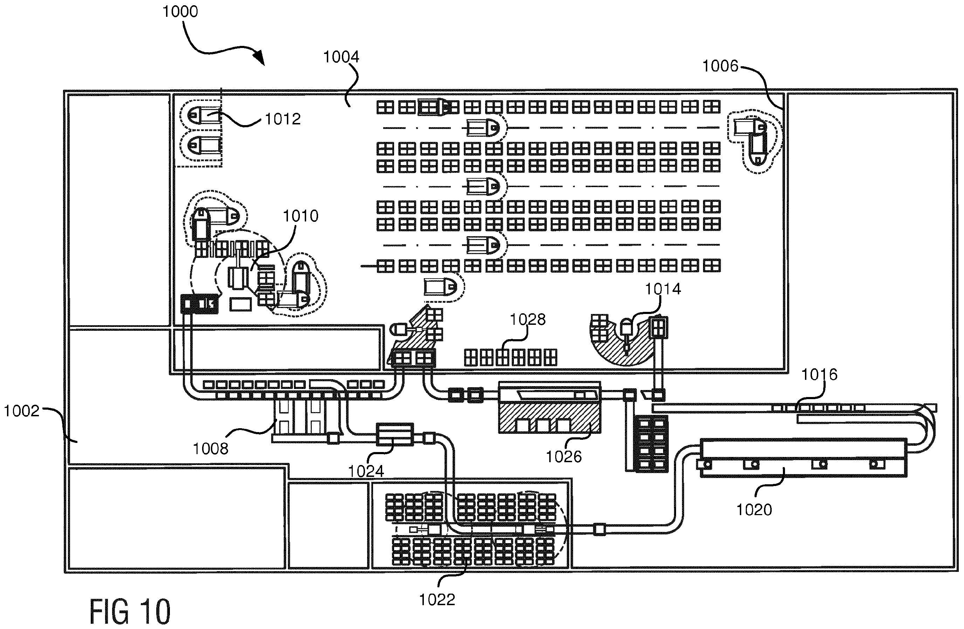

Fig 10 illustrates an example layout chart of a part of a cheese production system 1000 for Gouda cheese or another type of cheese. The production area is divided in main areas, a curd and cheese handling area 1002 and a pressing area 1004. The two areas may be divided by a wall 1006.

Generally, the cheese production line is divided in two loops, one for handling moulds filled with curd and whey mixture, also referred to only as curd, or cheeses, and one for handling casings enclosing the moulds.

Starting with the loop for handling the moulds, the curd and whey mixture is filled into moulds in a filler 1008. In this example, two parallel fillers are used in order to make sure that an appropriate capacity is reached, but also to make sure that production can continue during service of one of the fillers. The fillers may be provided with a cone shaped sieve for reducing the amount of whey filled into the moulds. The cone shaped sieve may further rotate and thus making use of the centrifugal force providing for that further whey is released from the curd and whey mixture before this is fed into the moulds.

After having filled curd and whey mixture into the mould, a lid is placed on top of the curd and whey mixture. In this example the lid is loosely fitted in the mould since during pressing the lid will be pressed down such that whey is released from curd and whey mixture via openings in the mould.

The moulds may be placed in trays before being filled with curd and whey mixture. The tray may have the purpose of holding the pressed out whey, but also by being combined with a cover a closed casing may be formed around the mould such that contaminants from the surroundings are prevented from coming in contact with the curd and whey mixture held in the mould. In this example, after having filled curd and whey mixture in the mould and having placed the lid on top of the curd and whey mixture the cover is placed on top of the tray such that the closed casing is formed.

After the mould is placed in the casing and this is closed the casing is fed from the curd and cheese handling area 1002 to the pressing area 1004, in this example via a lock. Since the curd and whey mixture is closed off from the surroundings by the casing there is no need to keep the pressing area as clean as is required e.g. in the curd and cheese handling area, in which the curd and whey mixture is in direct contact with the surroundings. An implication of this is in turn that it is possible to use e.g. robots and automated guided vehicles (AGVs) for handling the casings, since most of these are not designed to fulfill food safety standards.

Further, it is also an effect of having the curd and whey mixture closed off from the surroundings that less cleaning is needed in the pressing area compared to pressing areas where the curd and whey mixture is in direct contact with the surroundings. This of course makes it possible to lower the operational cost.

When being transferred into the pressing area 1004, air is pumped out of the casing in a vacuum pump station 1010 such that a lowered gas pressure in the casing is formed, as further described in relation to fig 8.

At this stage, or as early as directly during filling the curd and whey mixture into the mould, instructions on a pressing cycle may be uploaded to a controller in the casing. In many pressing cycles, the pressure applied onto the curd and whey mixture starts low and is successively increased. If having a casing as illustrated in fig 8, this can imply that the low starting pressure can be achieved by pumping out air and then successively letting air in such that a pressure difference is created and successively increased and thereby the pressing force to the mould is created by use of the gas pressure difference in the casing between the two internal casing spaces. The uploaded instructions may be general instructions used for all casings for all batches, but the instructions may also be adapted to perfectly fit a current batch of curd and whey mixture by forming the instructions based on input from the curd and whey mixture preparation, and/or the instructions may be adapted to fit different combinations of casings and moulds individually.

After air has been pumped out from the casing and instructions have been uploaded casings can be stacked by a robot arm and transported by an AGV 1012 to a storage position. Stacking however can also been done prior to pumping out air from the casings. In this particular example, the storage area is a room next to the curd and cheese handling area, but it would also be possible to press the curd and whey mixture while transporting the casings from one site to another. The pressing could also be done outside in open air storage as the curd and whey and latter cheese are fully separated by the closed casings.

After pressing, the casing is picked up by the AGV 1012 from the storage position and transported to a pressing end station 1014 in which data gathered during the pressing is downloaded and the casing is placed on a conveyor transporting the casing from the pressing area back to the curd and cheese handling area. In this particular example, there is one and the same curd and cheese handling area for handling curd and whey mixture before pressing and cheeses after pressing, but in another embodiment there may be several curd and cheese handling areas, such as one curd and cheese handling area handling curd and whey mixture before pressing and another cheese and curd handling area, that may be located at a different site if e.g. pressing is made under transportation, for handling cheeses after pressing.

When the casing re-enters the cheese and curd handling area 1002 the casing is opened and the mould holding a cheese, formed during the pressing, is removed from the casing.

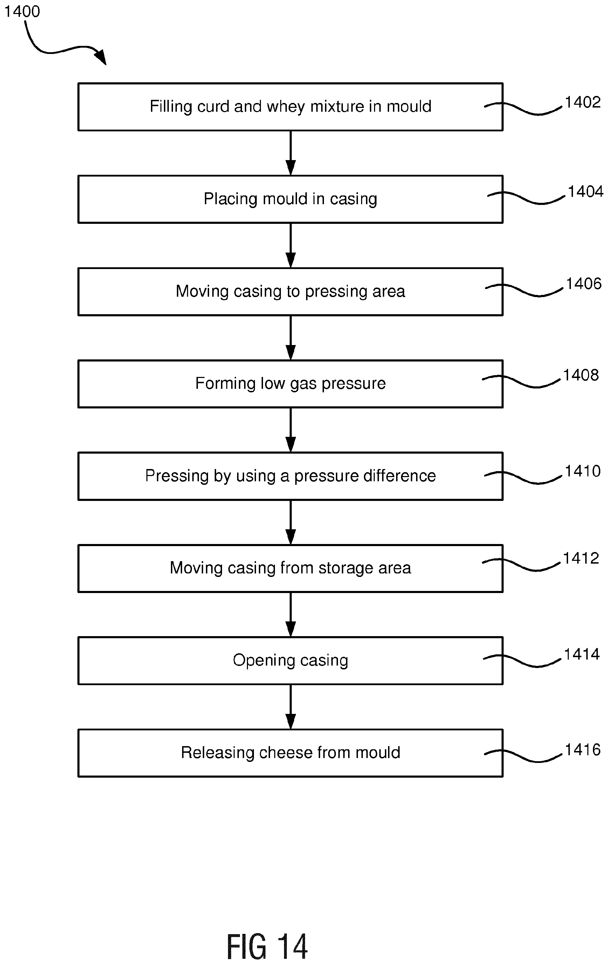

The mould is thereafter transferred to a de-moulding apparatus 1016 in which the cheese is released from the mould, as is illustrated more in detail in fig 14. Thereafter the moulds and cheeses are transported in parallel conveyor lines. In this particular example the cheese are transported on a cheese conveyor placed below a mould conveyor, as illustrated in fig 14.

In case round cheeses are being produced the cheeses may after being released from the mould be transferred to an apparatus configured to provide for that any edges, so called press-rinds, of the cheeses formed during pressing are removed such that round cheeses without edges are achieved.

After having released the cheeses from the moulds, the cheeses are transported to a brine bath and for ripening (not illustrated in fig 10).

The moulds are transported to a cleaning station 1020 in which the different parts of the moulds are cleaned. The moulds may comprise a main part and a lid as illustrated in fig 8, but as an alternative they may also comprise a main part formed as a sleeve, a lid and a loose bottom, in line with the demoulding apparatus illustrated in fig 14.

After having cleaned the moulds they are transported to a storage room 1022. In case the same format is to be used for another batch the moulds can be transferred through the storage room directly to the filler 1008. Before reaching the filler the moulds are passed via an apparatus 1024 separating the lid and the main part from each other such that the mould is ready to receive the curd and whey mixture. At this position mould parts can also be prepared for next cycle of use, for example by disinfecting or cleaning them.

As stated above, the moulds and curd and whey mixture or cheeses are handled in one loop, as described above, while the casings, for example the tray and the cover illustrated in fig 8, are handled in another loop.

Since the moulds are placed in the casings during pressing, the two loops coincide in this part of the process. However, after the casings and moulds are separated from each other, that is, after they have been transferred from the pressing area to the curd and cheese handling area, the casings can be transferred to a casings cleaning station 1026 for being cleaned before they are transferred back to the pressing area for being stored again. In order to make sure that there will not be a shortage of casings a buffer 1028 of casings may be provided. In order to not recontaminate the casings these can be stored closed. From the pressing area the casings can be transferred back to the curd and cheese handling area such that moulds filled with curd and whey mixture can be placed in the casings. Alternatively, the casings can be transferred directly from the cleaning station 1026 to a position where moulds are placed in the casings.

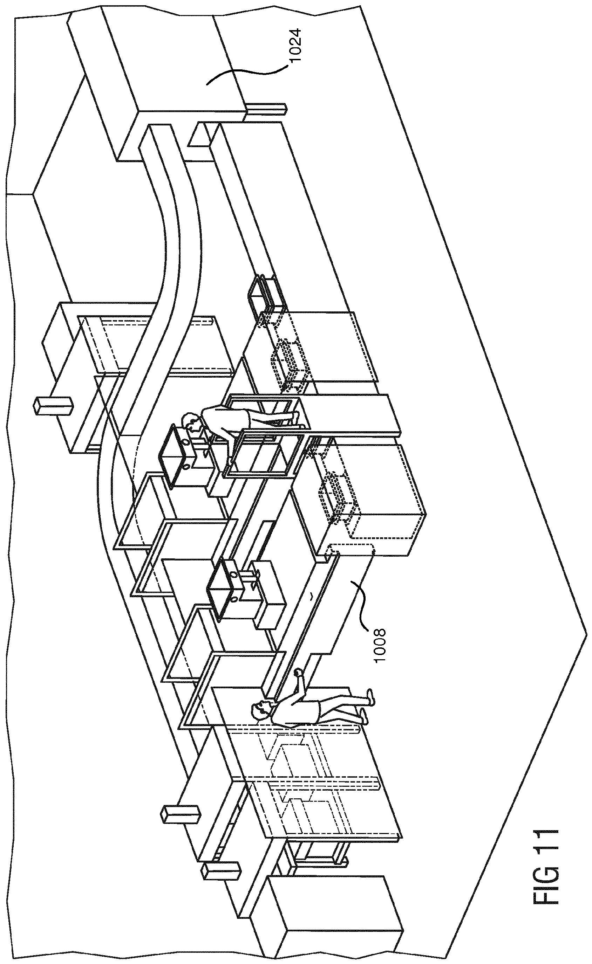

Fig 11 illustrates an example of how a filler 1008 and an apparatus 1024 could be embodied. Moulds are fed to the apparatus 1024 in which the main part of the mould, consisting of one piece or two pieces, such as a sleeve shaped body and a loose bottom section, and a top lid are prepared such that the main part can be filled with curd and whey mixture and the top lid can be applied after the filling.

More in detail, the main parts can be fed via a conveyor to one of two fillers. Each of the fillers may have a conveyor or similar for transporting the mould to a position just beneath a conical sieve arranged to release whey from the curd and whey mixture. Though not illustrated, there can be provided a pipe feeding curd and whey mixture connected to each of the conical sieves.

After the curd and whey mixture is placed in the main parts lids are provided onto the curd and whey mixture, thereafter the moulds with the curd and whey mixture can be placed in the casings. Alternatively, the lids can be provided onto the curd and whey mixture afterwards the moulds are placed in a lower part of the casings, i.e. the tray, but before an upper part of the casing, i.e. the cover, is placed on top of the tray.

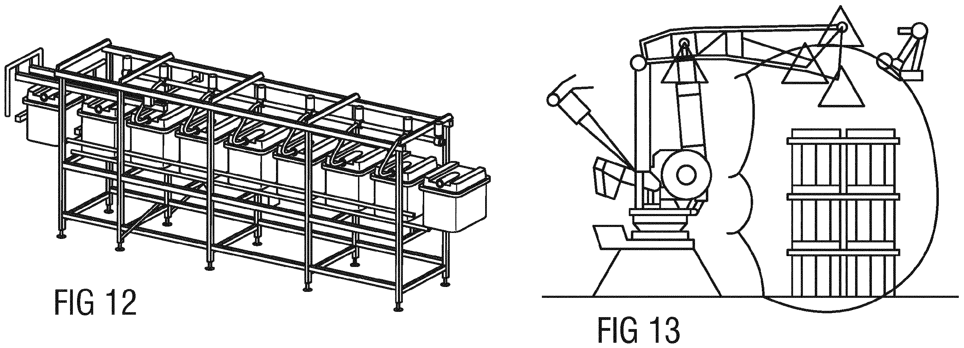

Fig 12 illustrates an example of an embodiment of the vacuum pump station. A number of casings, each of them holding a mould with curd and whey mixture, can be connected to a vacuum pump pumping out air from the casings such that a sufficiently low gas pressure is formed in the casings.

In order to store the casings holding the moulds efficiently a number of casings may be stacked for example by a robot as illustrated in fig 13, and then placed in rows by AGVs as illustrated in fig 10.

Fig 14 illustrates a flow chart 1400 illustrating a method for forming a cheese from a curd and whey mixture.

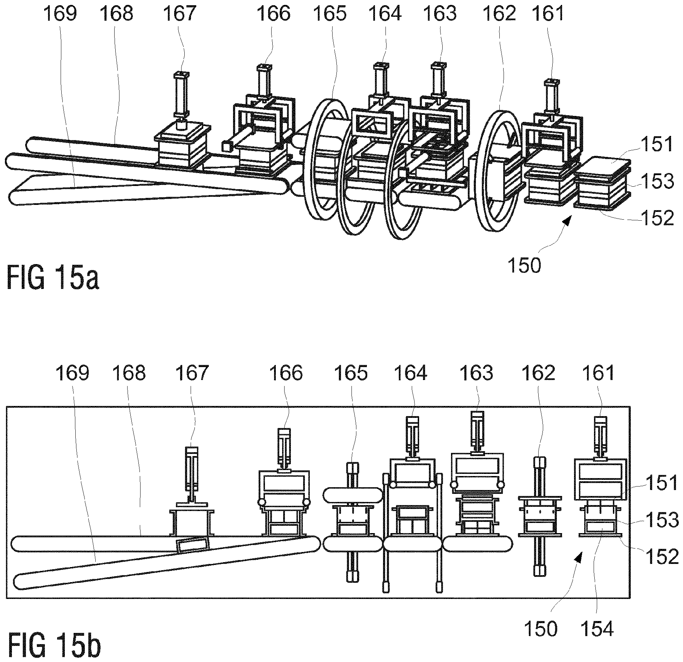

In a first step 1402 curd and whey mixture can be filled in a mould. The mould may be a two part mould comprising a main part and a lid as illustrated in fig 8 or a three part mould as illustrated in fig 15a and 15b.

After the mould is filled with the curd and whey mixture it is placed in a casing, in a step 1404. The casing may comprise a tray and a cover as illustrated in fig 8. The lid can be placed on the mould prior to placing the mould in the casing or after the mould is placed in the casing, but at least before the casing can be closed by placing the cover on top of the tray.

After the casing has been closed with the cover, this can be transferred to a pressing area, step 1406. The pressing area can be an area separated, e.g. a by a wall, from a curd and cheese handling area, as illustrated in fig 10. Since the curd and whey mixture is closed off from the surroundings when being enclosed in the casings it is e.g. possible to use AGVs, robots and other non-food safety approved equipment in the pressing area. The use of this kind of equipment will lower the operational cost, but also since a minor area is necessary to keep clean according to food safety regulations the operational cost will also be reduced due to lower costs for cleaning, house keeping and atmospheric control

In order to provide for that pressing can take place a low gas pressure can be formed in the casing by pumping out air from the casing, step 1408. This can be done in the pressing area, but it could also be done in the curd and cheese handling area before moving the casing to the pressing area.

Next, in step 1410, a cheese is formed from the curd and whey mixture by applying a pressure on the curd and whey mixture. A pressing cycle may vary, but according to one pressing cycle a first part of the pressing cycle may applying a relatively low pressure and then increasing the pressure successively in next steps. Since increasing the pressure can be achieved by opening a valve of the casing, that is, by releasing air from the atmosphere to the second space, this can be achieved by having the casing provided with a battery and a controller connected to the valves.

After having pressed the curd and whey mixture into a cheese the casing is moved from the pressing area to the curd and cheese handling area, step 1412. As described above, in the example illustrated in fig 10, one and the same area can be used for both curd and cheese handling, but it is also possible to have one area for curd handling and one area for cheese handling, which may be the case if e.g. pressing is made during transportation. Most often, in the end of the pressing the curd and whey mixture has been transformed into a cheese keeping together on its own.

After receiving the casing this can be opened, step 1414, and the cheese can be released from the mould, step 1416. The cheese may thereafter be transferred to brine bath and from there to ripening.

Fig 15a and 15b illustrate an example of the demoulding apparatus 1016 illustrated in fig 10. More particularly, the example relates to a demoulding apparatus for a mould 150 having a top lid 151, with a similar function as the lid 806 of the mould illustrated in fig 8, a sleeve shaped body 153 and a bottom 152.

When the mould 150 has been entered into the demoulding apparatus, in a first step at a first apparatus 161 (to the right in fig 15a and 15b), the top lid 151 can be released from the cheese 154 by lifting the lid upwards 151. The lid 151 is however not removed at this stage. Thereafter, in a second step at a second apparatus 162, the mould 150 can be turned upside down such that the cheese 154 is placed on top of the lid 151. When having the mould 150 placed upside down, in a third step at a third apparatus 163, the bottom 152 can be released and removed by lifting this upwards.

At this stage, when having released, or in other words loosened, the lid 151 and removed the bottom 152, and turned the mould 150 upside down, the cheese 154 is at this stage held by the body 153 and placed on the lid 151. In order to provide for that the cheese 154 can be loosened from the body 153 the body 153 can be pushed downwards in a fourth step at a fourth apparatus 164 while the cheese 154 is held back by the lid 151 thus loosening it from the body 153. If the cheese is not contained as one part or is in any other way damaged this can be detected at this stage, e.g. by using sensors or cameras, and the cheese is in such a case discarded by turning the assembly up-side-down releasing the damaged cheese or non-pressed curd from the mould to a below placed waste bin (not illustrated)

Next, in a fifth step at a fifth apparatus 165, the mould 150 is turned upside down once again such that the lid 151 is placed upwards and the cheese 154 and mould 150 is supported by a below placed conveyor. Thereafter, in a sixth step at a sixth apparatus 166, the lid 151 is removed. Since the lid 151 has been released in the first step the risk that the cheese 154 is damaged during this operation is low.

Thereafter, in a seventh step at a seventh apparatus 167, after having removed both the bottom 152 and the lid 151, and having released the cheese 154 from the body 153, the cheese 154 can be removed from the body 153 by holding this in place vertically by a mould conveyor 168, comprising two elements on which two outer portions of the body 153 is placed, at the same time as a pusher arm can be pushing out the cheese from the body by applying a pressure force from above. As the cheese 154 is previously already loosened from the mould 150 most probably cheeses will glide out by gravity and the pusher arm is acting as a reliability feature. When the cheese 154 is removed from the body 153 this gently falls down onto a cheese conveyor 169 placed below the mould conveyor 168.

When pushing out a cheese from the mould, which is possible thanks to the sleeved shaped body, a more reliable demoulding can be achieved compared to existing techniques, such as demoulding by shaking out the cheese, demoulding by using a vacuum head for pulling out the cheese or using pneumatic air for pushing out the cheese from the mould.

If using a pusher arm, or similar, for pushing out the cheese, in order to reduce the risk of damaging the cheese during demoulding, an adaptive system may be used to make sure that the correct force or speed for pushing out the cheese can be used.

Further, by measuring a height of the lid during the demoulding process, for instance in the beginning of the demoulding process, cheeses not being appropriately pressed may be detected and discarded, e.g. a too high position of the lid indicates for insufficient pressing. Having this feature these cheeses may be detected and discarded automatically at an early stage.

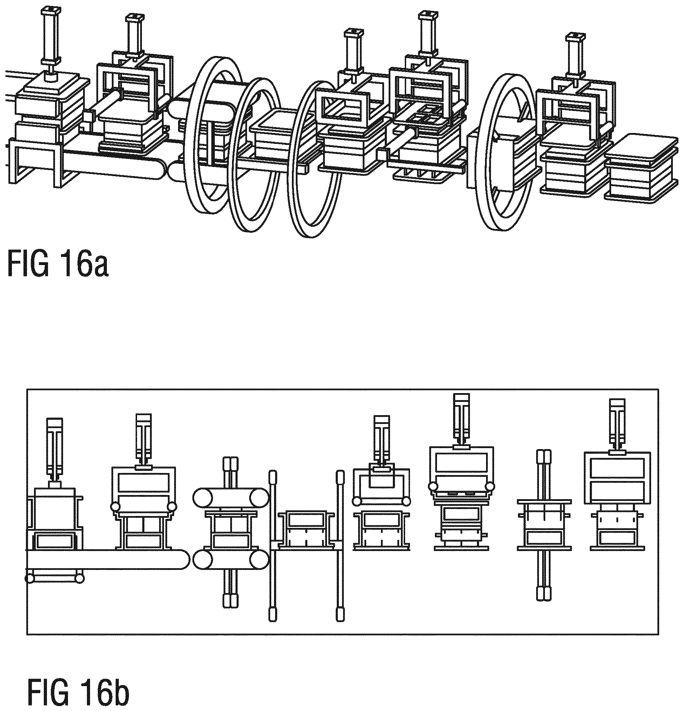

Fig 16a and 16b illustrate a demoulding apparatus similar to the demoulding apparatus illustrated in fig 15a and 15b. However, unlike the demoulding apparatus illustrated in fig 15a and 15b, the fourth step is divided in two steps, one for loosening, or in other words detaching, the sleeve shaped body from the cheese and another for discarding the cheese if the cheese has not been properly loosened, e.g. that the cheese does not hold together in one piece.

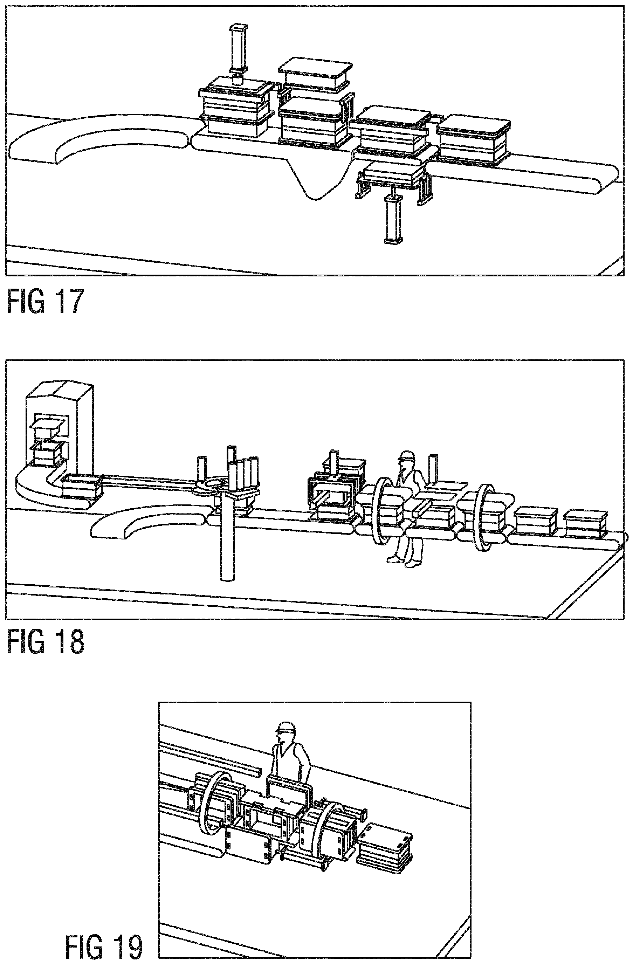

Fig 17 illustrates another example of a demoulding apparatus. In a first step (to the right in fig 17) the mould holding the cheese is received and the height of the lid may be measured by using sensors in order to get an indication of whether the pressing has been successful or not, as explained above. If an indication that the cheese has not been properly pressed is received the cheese may be discarded.

In a second step the bottom can be removed. In case the cheese has not been sufficiently pressed the cheese may follow the bottom, instead of staying in the mould. In such a case the cheese may be discarded, e.g. by turning the bottom plate towards a below placed waste bin (not illustrated).

A telescopic conveyor can be placed underneath the mould after the bottom is removed shifting the mould to the third position.

In a third step the lid can be loosened from the mould and cheese. The lid may also be used for releasing the cheese from the mould by pushing the cheese somewhat downwards in the mould.

In a fourth step, if needed to further release the cheese from the sleeve shaped body, a pusher arm may be used for pushing out the cheese, but only gravity may be sufficient to let the cheese glide down from the mould.

Fig 18 is another example of a demoulding apparatus with turning devices at separate positions. The cheese pushing assembly at the end of the demoulding apparatus comprises automatic exchangeable pushing plates, plates specific suiting the dimensions of the mould to be emptied.

Fig 19 illustrates yet another example of a demoulding apparatus. Similar to the demoulding apparatus illustrated in fig 17, in a first step the mould with the cheese can be received and the height of the lid can be measured to get an indication of whether the pressing has been successful or not.

In a second step the mould with the cheese can be turned 90 degrees such the one of the side walls of the sleeve shaped body is placed upwards.

In a third step the lid and the bottom are removed, either after one another or at the same time, the latter having the advantage that the cheese is likely to stay on the spot in the mould body as potential pull-forces onto the cheese by both lid and bottom movements equalize. In order to loosen, or detach, the cheese from the mould the lid may be pushed inwards again before being pulled outwards.

In a fourth step the sleeve shaped body can be turned 90 degrees, and the cheese can be released from the sleeve shaped body, either by gravity or by using a pusher arm, or similar, or a combination thereof.

In above described demoulding apparatus the different steps are mostly separate positioned. It is however also possible to combine steps at less positions or even only one position

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for releasing a cheese (154) from a mould (150), said mould comprising a first end part (151), a sleeve formed body (153) and a second end part (152), said method comprising
detaching said first end part from said cheese,
turning said mould with said cheese such that said cheese is placed on said first end part,
removing said second end part,
detaching said cheese from said sleeve formed body by moving said sleeve shaped body downwards relative to said cheese,
turning said mould with said cheese upside down such that said first end part is placed on said cheese,
removing said first end part,
separating said cheese and said sleeve shaped body by displacing said cheese and said sleeve shaped body relative to each other.

2. The method according to claim 1, wherein said cheese is separated from said sleeve shaped body by vertically displacing said cheese and said sleeve shaped body.

3. The method according to claim 2, wherein said cheese is separated from said sleeve shaped body by moving said cheese downwards a first vertical distance while moving said sleeve shaped body downwards a second vertical distance, wherein said first vertical distance is greater than said second vertical distance.

4. The method according to any one of the preceding claims, wherein said step of separating said cheese from said sleeve shaped body by displacing said cheese and said sleeve shaped body comprises pushing said cheese out from said sleeve shaped body.

5. The method according to any of the preceding claims, further comprising determining a height of said cheese by determining a position of said lid in relation to said sleeve shaped body.

6. The method according to claim 5, further comprising comparing said height of said cheese to a reference height interval, and, if said height is not within said interval, discarding said cheese.

7. The method according to any one of the preceding claims, wherein said first end part is a lid.

8. The method according to any one of the preceding claims, wherein said second end part is a bottom.

9. An apparatus for releasing a cheese (154) from a mould (150), said mould comprising a first end part (151), a sleeve formed body (153) and a second end part (152), said apparatus comprising
a first device (161) for detaching said first end part from said cheese, a second device (162) for turning said mould with said cheese such that said cheese is placed on said first end part,
a third device (163) for removing said second end part,
a fourth device (164) for detaching said cheese from said sleeve formed body by moving said sleeve shaped body downwards relative to said cheese,
a fifth device (165) for turning said mould with said cheese upside down such that said first end part is placed on said cheese,
a sixth device (166) for removing said first end part,
a seventh device (167) for separating said cheese and said sleeve shaped body by displacing said cheese and said sleeve shaped body relative to each other.

10. The apparatus according to claim 9, wherein said seventh device comprises a first conveyor (168) belt arrangement for conveying said sleeve shaped body and a second conveyor belt (169) arrangement for conveying said cheese.

11. The apparatus according to claim 10, wherein at least in part said first conveyor belt arrangement is placed above said second conveyor belt arrangement.

12. The apparatus according to claim 10 or 11, wherein said second conveyor belt arrangement at least in part is placed between a first part of said first conveyor belt arrangement and a second part of said firs conveyor belt arrangement.

13. The apparatus according to any of the claims 9 to 12, wherein said first end part is a lid.

14. The apparatus according to any of the claims 9 to 13, wherein said second end part is a bottom.

## Patentansprüche

1. Verfahren zum Trennen von Käse (154) aus einer Form (150), wobei die Form ein erstes Endteil (151), einen hülsenförmigen Körper (153) und ein zweites Endteil (152) umfasst, wobei das Verfahren umfasst:
Ablösen des ersten Endteils von dem Käse,
Wenden der Form mit dem Käse, so dass der Käse auf dem ersten Endteil platziert wird,
Entfernen des zweiten Endteils,
Ablösen des Käses von dem hülsenförmigen Körper durch Abwärtsbewegen des hülsenförmigen Körpers relativ zu dem Käse,
Wenden der Form mit dem Käse von oben nach unten,
so dass das erste Endteil auf dem Käse platziert wird,
Entfernen des ersten Endteils,
Separieren des Käses und des hülsenförmigen Körpers durch Verschieben des Käses und des hülsenförmigen Körpers relativ zueinander.

2. Verfahren nach Anspruch 1, wobei der Käse von dem hülsenförmigen Körper durch vertikales Verschieben des Käses und des hülsenförmigen Körpers separiert wird.

3. Verfahren nach Anspruch 2, wobei der Käse von dem hülsenförmigen Körper separiert wird, indem der Käse eine vertikale Distanz abwärts bewegt wird, während der hülsenförmige Körper eine zweite vertikale Distanz abwärts bewegt wird, wobei die erste vertikale Distanz größer als die zweite vertikale Distanz ist.

4. Verfahren nach einem der vorhergehenden Ansprüche, wobei der Schritt des Separierens des Käses von dem hülsenförmigen Körper durch Verschieben des Käses und des hülsenförmigen Körpers Schieben des Käses aus dem hülsenförmigen Körper umfasst.

5. Verfahren nach einem der vorhergehenden Ansprüche, ferner umfassend Bestimmen einer Höhe des Käses durch Bestimmen einer Position des Deckels in Relation zu dem hülsenförmigen Körper.

6. Verfahren nach Anspruch 5, ferner umfassend Vergleichen der Höhe des Käses mit einem Referenzhöhenintervall, und, falls die Höhe nicht innerhalb des Intervalls ist, Verwerfen des Käses.

7. Verfahren nach einem der vorhergehenden Ansprüche, wobei das erste Endteil ein Deckel ist.

8. Verfahren nach einem der vorhergehenden Ansprüche, wobei das zweite Endteil ein Boden ist.

9. Apparat zum Trennen von Käse (154) aus einer Form (150), wobei die Form ein erstes Endteil (151), einen hülsenförmigen Körper (153) und ein zweites Endteil (152) umfasst, wobei der Apparat umfasst:
eine erste Vorrichtung (161) zum Ablösen des ersten Endteils von dem Käse,
eine zweite Vorrichtung (162) zum Wenden der Form mit dem Käse, so dass der Käse auf dem ersten Endteil platziert wird,
eine dritte Vorrichtung (163) zum Entfernen des zweiten Endteils,
eine vierte Vorrichtung (164) zum Ablösen des Käses von dem hülsenförmigen Körper durch Abwärtsbewegen des hülsenförmigen Körpers relativ zu dem Käse,
eine fünfte Vorrichtung (165) zum Wenden der Form mit dem Käse von oben nach unten, so dass das erste Endteil auf dem Käse platziert wird,
eine sechste Vorrichtung (166) zum Entfernen des ersten Endteils,
eine siebte Vorrichtung (167) zum Separieren des Käses und des hülsenförmigen Körpers durch Verschieben des Käses und des hülsenförmigen Körpers relativ zueinander.

10. Apparat nach Anspruch 9, wobei die siebte Vorrichtung eine erste Förderbandanordnung (168) zum Fördern des hülsenförmigen Körpers und eine zweite Förderbandanordnung (169) zum Fördern des Käses umfasst.

11. Apparat nach Anspruch 10, wobei die erste Förderbandanordnung mindestens teilweise oberhalb der zweiten Förderbandanordnung platziert ist.

12. Apparat nach Anspruch 10 oder 11, wobei die zweite Förderbandanordnung mindestens teilweise zwischen einem ersten Teil der ersten Förderbandanordnung und einem zweiten Teil der ersten Förderbandanordnung platziert ist.

13. Apparat nach einem der Ansprüche 9 bis 12, wobei das erste Endteil ein Deckel ist.

14. Apparat nach einem der Ansprüche 9 bis 13, wobei das zweite Endteil ein Boden ist.

## Revendications

1. Procédé pour démouler un fromage (154) d'un moule (150), ledit moule comprenant une première partie terminale (151), un corps (153) en forme de manchon et une seconde partie terminale (152), ledit procédé comprenant les opérations consistant à :
décoller ladite première partie terminale dudit fromage,
retourner ledit moule avec ledit fromage de telle sorte que ledit fromage soit placé sur ladite première partie terminale,
retirer ladite seconde partie terminale,
décoller ledit fromage dudit corps en forme de manchon en déplaçant ledit corps en forme de manchon vers le bas par rapport audit fromage,
retourner ledit moule avec ledit fromage à l'envers de telle sorte que ladite première partie terminale soit placée sur ledit fromage,
retirer ladite première partie terminale,
séparer ledit fromage et ledit corps en forme de manchon en déplaçant ledit fromage et ledit corps en forme de manchon l'un par rapport à l'autre.

2. Procédé selon la revendication 1, dans lequel on sépare ledit fromage dudit corps en forme de manchon en déplaçant verticalement ledit fromage et ledit corps en forme de manchon.

3. Procédé selon la revendication 2, dans lequel on sépare ledit fromage dudit corps en forme de manchon en déplaçant ledit fromage vers le bas sur une première distance verticale tout en déplaçant ledit corps en forme de manchon vers le bas sur une seconde distance verticale, dans lequel ladite première distance verticale est supérieure à ladite seconde distance verticale.

4. Procédé selon l'une quelconque des revendications précédentes, dans lequel ladite étape de séparation dudit fromage dudit corps en forme de manchon en déplaçant ledit fromage et ledit corps en forme de manchon comprend l'opération consistant à pousser ledit fromage hors dudit corps en forme de manchon.

5. Procédé selon l'une quelconque des revendications précédentes, comprenant en outre l'opération consistant à déterminer la hauteur dudit fromage en déterminant la position dudit couvercle par rapport audit corps en forme de manchon.

6. Procédé selon la revendication 5, comprenant en outre les opérations consistant à comparer ladite hauteur dudit fromage à un intervalle de hauteur de référence, et, si ladite hauteur n'est pas comprise dans ledit intervalle, mettre ledit fromage au rebut.

7. Procédé selon l'une quelconque des revendications précédentes, dans lequel ladite première partie terminale est un couvercle.

8. Procédé selon l'une quelconque des revendications précédentes, dans lequel ladite seconde partie terminale est un fond.

9. Appareil pour démouler un fromage (154) d'un moule (150), ledit moule comprenant une première partie terminale (151), un corps (153) en forme de manchon et une seconde partie terminale (152), ledit appareil comprenant :
un premier dispositif (161) pour décoller ladite première partie terminale dudit fromage,
un deuxième dispositif (162) pour retourner ledit moule avec ledit fromage de telle sorte que ledit fromage soit placé sur ladite première partie terminale,
un troisième dispositif (163) pour retirer ladite seconde partie terminale,
un quatrième dispositif (164) pour décoller ledit fromage dudit corps en forme de manchon en déplaçant ledit corps en forme de manchon vers le bas par rapport audit fromage,
un cinquième dispositif (165) pour retourner ledit moule avec ledit fromage à l'envers de telle sorte que ladite première partie terminale soit placée sur ledit fromage,
un sixième dispositif (166) pour retirer ladite première partie terminale,
un septième dispositif (167) pour séparer ledit fromage et ledit corps en forme de manchon en déplaçant ledit fromage et ledit corps en forme de manchon l'un par rapport à l'autre.

10. Appareil selon la revendication 9, dans lequel ledit septième dispositif comprend un premier agencement de courroie de transporteur (168) pour transporter ledit corps en forme de manchon et un second agencement de courroie de transporteur (169) pour transporter ledit fromage.

11. Appareil selon la revendication 10, dans lequel ledit premier agencement de courroie de transporteur est placé au moins en partie au-dessus dudit second agencement de courroie de transporteur.

12. Appareil selon la revendication 10 ou 11, dans lequel ledit second agencement de courroie de transporteur est placé au moins partiellement entre une première partie dudit premier agencement de courroie de transporteur et une seconde partie dudit premier agencement de courroie de transporteur.

13. Appareil selon l'une quelconque des revendications 9 à 12, dans lequel ladite première partie terminale est un couvercle.

14. Appareil selon l'une quelconque des revendications 9 à 13, dans lequel ladite seconde partie terminale est un fond.
